(19) Europäisches Patentamt
European Patent Office
Office européen des brevets

(11) EP 2 854 557 B1

(12) EUROPEAN PATENT SPECIFICATION

(45) Date of publication and mention
of the grant of the patent:
**02.12.2015 Bulletin 2015/49**

(51) Int Cl.:
*A23D 9/013* (2006.01)     *A23D 9/007* (2006.01)
*A23D 7/01* (2006.01)     *A23D 7/005* (2006.01)

(21) Application number: **13717275.5**

(86) International application number:
**PCT/EP2013/058131**

(22) Date of filing: **19.04.2013**

(87) International publication number:
**WO 2013/174585 (28.11.2013 Gazette 2013/48)**

(54) **AERATED OIL CONTAINING SUCROSE FATTY ACID ESTER AND HYDROPHOBIN**

LUFTDURCHSETZTES ÖL MIT SACCHAROSE-FETTSÄUREESTER UND HYDROPHOBIN

HUILE AÉRÉE CONTENANT UN ESTER D'ACIDE GRAS DE SUCROSE ET D'HYDROPHOBINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2012 EP 12169301**

(43) Date of publication of application:
**08.04.2015 Bulletin 2015/15**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **BOT, Arjen**
**NL-3133 AT Vlaardingen (NL)**
• **PENG, Jinfeng**
**NL-6708 AK Wageningen (NL)**
• **XU, Qingguo**
**Baltimore, Maryland 21210 (US)**
• **ZHU, Shiping**
**Sharnbrook**
**Bedfordshire MK44 1LQ (GB)**

(74) Representative: **van Benthum, Wilhelmus A. J.**
**Unilever Patent Group**
**Olivier van Noortlaan 120**
**3133 AT Vlaardingen (NL)**

(56) References cited:
**EP-A1- 1 623 631**     **WO-A1-2010/145966**
**JP-A- 7 016 051**

• **COX A R ET AL: "Exceptional stability of food
foams using class II hydrophobin HFBII",** FOOD
HYDROCOLLOIDS, ELSEVIER BV, NL, vol. 23, no.
2, 1 March 2009 (2009-03-01), pages 366-376,
XP026128626, ISSN: 0268-005X, DOI:
10.1016/J.FOODHYD.2008.03.001 [retrieved on
2008-03-07]
• **TCHUENBOU-MAGAIA F L ET AL:
"Hydrophobins stabilised air-filled emulsions for
the food industry",** FOOD HYDROCOLLOIDS,
ELSEVIER BV, NL, vol. 23, no. 7, 1 October 2009
(2009-10-01), pages 1877-1885, XP026145883,
ISSN: 0268-005X, DOI: 10.1016/J.FOODHYD.
2009.03.005 [retrieved on 2009-03-24]

**Description**

The present invention relates to an oil containing gas bubbles, sucrose fatty acid ester and hydrophobin. Moreover the invention relates to a method of making these products, as well as using this composition to reduce spattering during shallow frying of food products.

**BACKGROUND OF THE INVENTION**

One of the uses of oil and emulsions like butter and margarine, is in shallow frying of meat, vegetables and other food products in a pan. One of the disadvantages of the use of pure oil is that when the food product is introduced into a hot pan with hot oil, that water contained in or attached to the food product may lead to strong spattering of oil. Additionally, using pure oil increases the caloric value of the food, as part of the oil may be absorbed by the food product when being fried. In order to overcome these drawbacks, margarine contains water to replace part of the oil, and additionally anti-spattering agents like salt and lecithin. However, still the amount of calories may be too high, therefore further reduction of calories by using air may be an option. Moreover, when margarine or butter is heated in a pan, the water in the product evaporates, which also may lead to spattering. The water in an emulsion additionally costs energy, for example in transport of the emulsion from factory to consumer, and when the emulsion is heated by evaporation of the water. Hence (partial) replacement of water by air is a possibility to reduce the required amount of energy to transport and heat the product.

Many food products are aerated, such as mousses, ice cream, and whipped cream. These food products contain small gas bubbles, and the gases may include air, nitrogen, and/or carbondioxide. Aerated food products are being developed with two aspects which are of importance: first the foamability (how easy is it to aerate the food product), and second the stability of the aeration during storage (how well remain the air bubbles intact upon storage of the aerated food product). Hydrophobins are proteins known for their ability to effectively stabilise gas bubbles in food products, especially in the presence of water. The hydrophobins contribute both to foamability and foam stability.

WO 2006/010425 A1 discloses aerated foods containing hydrophobin, and WO 2007/087968 A1 and WO 2010/136355 A1 disclose oil-in-water emulsions containing hydrophobin. EP 2 052 628 A1 discloses aerated oil-continuous emulsion food products (e.g. spreads, margarine) containing hydrophobin, as well as aerated shortenings or edible oils containing hydrophobin.

WO 2010/067059 A1 discloses that air bubbles in emulsions may reduce the spattering of these emulsions when used for frying.

WO 2010/145966 A1 discloses a water-in-oil emulsion food product having an overrun of less than 15%, containing hydrophobin as anti-spattering agent. As this disclosure relates to emulsions, these compositions contain water, and only have a low volume of gas bubbles, as the overrun is less than 15%.

The use of sucrose fatty acid esters in fat-continuous products is known. JP 7-16051 discloses frying oil containing a combination of sucrose fatty acid ester and polyglycerol fatty acid ester. According to JP 7-16051 especially this combination of emulsifiers has various advantageous properties when the oil is used for deep frying of food products, among them splashing of the oil. The combination of emulsifiers outperforms the use of sucrose fatty acid ester or polyglycerol fatty acid ester alone. JP 7-16051 is silent about aerated oil.

EP 1 052 284 A1 claims a setting agent of fats and oils containing sucrose fatty acid ester with a HLB smaller than 3, and mentions margarine and fat spreads that may contain the mixture of fat and sucrose fatty acid ester. The setting agent is used to modify the hardness of the oil phase.

EP 410 507 A2 discloses polyol fatty acid polyesters for use in aerated fat continuous products. The fat blend of the continuous phase comprises at least 50% of the polyol fatty acid polyesters. A preferred polyol is sucrose. The fat compositions may be used in chocolate-like food products.

US 2006/0078659 A1 discloses a mousse-type oil, that may contain sucrose fatty acid ester (with HLB value less than 7, preferably less than 5). The mousse is formed when the oil is discharged from a nozzle under pressure.

EP 375 238 A2 discloses an aerated fatty composition containing at least 5 wt%, preferably 20 wt% to 55 wt% of sugar fatty acid ester. The other part of the fatty composition is optionally fatty materials like triglycerides, lipid soluble flavours, emulsifiers, and colourants. The compositions are in the form of shortenings, hence free from water. The examples disclose sucrose octa-esters and sucrose hepta-esters. The fatty composition may be used as a table spread, albeit not in the form of an emulsion, but as a water-free spread.

**SUMMARY OF THE INVENTION**

Hydrophobins are difficult to suspend in oils without the presence of water. When hydrophobins are added to oil, they relatively quickly settle to the bottom, and hence will not be homogeneously dispersed in the oil. Hence the benefits of hydrophobins (like stabilising of gas bubbles) may be difficult to achieve, when not homogeneously distributed in the oil over the shelf-life of the composition. Hence it is an objective of the present invention to provide an oil containing hydrophobin, in which the hydrophobin remains homogeneously dispersed during storage of the oil. It is another object of the present invention to provide an aerated oil that can be used for frying, and that reduces the amount of calories that are added to the food products that are being fried. It is another object of the present invention to provide an aerated oil that can be used for frying, and that reduces the amount of energy required to heat the oil as compared to conventional frying oils or frying emulsions.

These objectives are met by an aerated edible oil that comprises sucrose fatty acid ester and hydrophobin. By the formation of a stable aerated oil, which does not collapse, the hydrophobins remain homogeneously distributed in the aerated oil during storage. When the oil is used for frying, there is no occurrence of primary spattering when the oil is heated in a pan, because the composition is nearly free or completely free from water. Additionally, the secondary spattering when the oil is hot and a food product is introduced into the hot pan in order to be fried, is strongly reduced by the presence of gas bubbles, hydrophobin, and sucrose fatty acid ester. The overrun of the composition ranges from 15% to 500%, which leads to a stable oil mousse-like type product, containing evenly distributed sucrose fatty acid ester and hydrophobin. Moreover the presence of gas bubbles leads to reduced use of calories in frying, as due to the gas bubbles, the consumer tends to use less oil overall than when using oil that is not aerated. And finally, as the amount of water in the composition is very low (if present at all), and the composition contains gas bubbles instead of water droplets (as in a conventional frying emulsion), the amount of energy required for heating the frying oil in a pan is reduced as compared to heating the same volume of non-aerated oil or emulsion containing water. Hence in a first aspect the present invention provides an edible oil composition comprising a sucrose fatty acid ester having a HLB value ranging from 1 to 7 at a concentration ranging from 1% to 20% by weight of the composition; and comprising hydrophobin at a concentration ranging from 0.01 to 1% by weight of the composition; and wherein the composition is aerated having an overrun ranging from 15% to 500%; and wherein the water content of the composition is such that the water to hydrophobin weight ratio is less than 1:5, preferably less than 1:10.

In a second aspect the present invention provides a method for preparation of a composition according to the first aspect of the invention, comprising the steps:

a) providing a liquid mixture of an edible oil and a sucrose fatty acid ester having a HLB value ranging from 1 to 7 at a concentration ranging from 1% to 20% by weight of the composition;
b) mixing hydrophobin into the liquid mixture from step a) at a concentration ranging from 0.01 to 1% by weight of the composition; and
c) aerating the liquid mixture from step b) to an overrun ranging from 15% to 500%.

In a third aspect the present invention provides use of a composition according to the first aspect of the invention or prepared according to the method of the second aspect of the invention to reduce spattering during shallow frying of a food product.

## DETAILED DESCRIPTION

Unless defined otherwise, all technical and scientific terms used herein have the same meaning as commonly understood by one of ordinary skill in the art. All percentages, unless otherwise stated, refer to the percentage by weight. The abbreviation 'wt%' refers to percentage by weight. In case a range is given, the given range includes the mentioned endpoints.

The average gas bubble diameter is expressed as the d4,3 value, which is the volume weighted mean diameter. The gas bubbles in a product may not be perfect spheres. The volume based bubble diameter equals the diameter of a sphere that has the same volume as a given bubble.

Ambient temperature is considered to be a temperature between about 20°C and about 25°C, preferably between 20°C and 25°C, preferably between 20°C and 23°C.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. Hence the term 'aeration' is not limited to aeration using air, and encompasses the 'gasification' with other gases as well. The extent of aeration is measured in terms of 'overrun' (with unit '%'), which is defined as:

$$overrun = \frac{\text{volume of aerated product - volume of initial mix}}{\text{Volume of initial mix}} \times 100\% \qquad (1)$$

where the volumes refer to the volumes of aerated product and unaerated initial mix (from which the aerated product is made). Overrun is measured at atmospheric pressure.

The overrun of an aerated product and the volume fraction of gas in the aerated product generally relate in the following way:

$$volume\ fraction\ gas\ (in\ \%) = 100\ x\ overrun\ /\ (1 + overrun) \qquad (2)$$

After formation, a foam will be vulnerable to coarsening by mechanisms such as creaming, Ostwald ripening and coalescence. By creaming, gas bubbles migrate under the influence of gravity to accumulate at the top of a product. Ostwald ripening or disproportionation refers to the growth of larger bubbles at the expense of smaller ones. Coalescence refers to merging of air bubbles by rupture of the film in between them.

A stable foam or aerated product in the context of the present invention is defined as being stable for at least 30 minutes, more preferred at least an hour, more preferred at least a day, even more preferred at least a week, and most preferred at least a month, and most preferred several months. A stable foam can be defined to be stable with regard to total foam volume, and/or gas bubble size, and looses maximally 20% of its volume during 1 month storage. On the other hand systems may exist which loose more than 20% of their volume during 1 month storage, which nevertheless are considered to have a good stability, as the stability of such foams is much better than comparative foams that do not contain sucrose esters or hydrophobins. Foams of which the average bubble size strongly increases over time are regarded to be less stable than foams of which the average bubble size remains small over time.

### Edible Fats and Oils

The terms 'fat' and 'oil' are used interchangeably. Where applicable the prefix '*liquid*' or '*solid*' is added to indicate if the fat or oil is liquid or solid at ambient temperature as understood by the person skilled in the art. The term '*structuring fat*' refers to a fat that is solid at ambient temperature. A structuring fat may serve to structure a composition at room temperature. The term '*liquid oil*' refers to an oil that is liquid at ambient temperature. In common language, liquid fats are often referred to as oils but herein the term fats is also used as a generic term for such liquid fats.

Edible oils contain a large number of different triacylglycerols (TAGs) with varying physical properties. The TAGs are esters of glycerol and three fatty acids. The TAGs in edible oils contain fatty acids with an even number of carbon atoms in the chains, generally varying between 4 and 24 in number. Common fatty acids from vegetable origin are C10, C12, C14, C16, C18, C20 and C22, and most common TAGs are composed of these fatty acids. The fatty acids may be saturated, or monounsaturated or polyunsaturated. Each fatty acid can contain up to three double bonds at certain positions in the chain. Additionally especially fish oil contains a high number of unsaturated fatty acids with more than one unsaturated bond in the chain, up to even 4 or 5 double bonds. The terms '*triacylglycerols*', '*TAGs*', and '*triglycerides*' may be used interchangeably in here. In the context of the present invention, triglycerides are understood to be edible oils and fats.

The structuring fat that may be present in the composition of the invention may be a single fat or a mixture of different fats. The structuring fat may be of vegetable, animal (e.g. dairy fat) or marine origin. Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of structuring fat of vegetable origin.

Preferably the structuring fat is selected from the group consisting of palm fat, allan blackia, pentadesma, shea butter, coconut oil, soybean oil, rapeseed oil and dairy fat. More preferably the natural fat is selected from the group consisting of palm oil, palm kernel oil, palm oil fraction, palm kernel fraction, coconut oil and dairy fat fraction. Even more preferably the natural fat is selected from the group consisting of palm oil, palm kernel oil, palm oil fraction, palm kernel fraction and coconut oil.

The various fat sources may be fully hardened by full hydrogenation, they may be fractionated, chemically or enzymatically intra-esterified, and/or chemically or enzymatically inter-esterified.

As the purpose of the structuring fat, if present, is to provide structure to the aerated oil it may be preferred not to include too many and/or too much of additional components that do not primarily add to the structuring ability of the structuring fat, like for example protein and carbohydrates. Preferably the structuring fat comprises not more than 20 wt% of protein and/or carbohydrates, more preferably not more than 15 wt%, even more preferably not more than 10 wt%, and still more preferably not more than 5 wt%. Most preferably no protein and carbohydrates are present. Moreover, preferably the amount of water is not more than 20 wt%, preferably not more than 10 wt% and more preferably not more than 5 wt%. Most preferably no water is present in the structuring fat.

To optimize the structuring capacity, structuring fats having a certain solid fat content are preferred. Therefore, the structuring fat as present in the solid particles preferably has a solid fat content N10 from 50 to 100%, N20 from 26 to 95% and N35 from 5 to 60%. The N-value expresses the solid fat content (SFC) at a certain temperature (in °C). These N-values are determined using a method with NMR that is known to the skilled person.

The structuring fat preferably has a solid fat content N10 selected from the list consisting of 45 to 100%, 55 to 90% and 65 to 85%;

N20 selected from the list consisting of 25 to 80%, 40 to 70% and 45 to 65%;

N35 selected from the list consisting of 0.5 to 60%, 0.5 to 20%, 0.5 to 14%, 15 to 50% and 30 to 45%.

Preferred solid fat content profiles of the structuring fat are:

N10 from 45 to 100%, N20 from 25 to 80% and N35 from 0.5 to 60%;
N10 from 55 to 90%, N20 from 40 to 70% and N35 from 0.5 to 20%;
N10 from 55 to 90%, N20 from 40 to 70% and N35 from 15 to 50%;
N10 from 65 to 85%, N20 from 45 to 65% and N35 from 0.5 to 14%; and
N10 from 65 to 85%, N20 from 45 to 65% and N35 from 30 to 45%.

Instead of a structuring fat, also other structuring components like oleogels, or organogels may be used.

Both the structuring fat as well as the liquid oil may originate from various edible natural oils. Fats include: plant oils (for example: allanblackia oil, apricot kernel oil, arachis oil, arnica oil, argan oil, avocado oil, babassu oil, baobab oil, black seed oil, blackberry seed oil, blackcurrant seed oil, blueberry seed oil, borage oil, calendula oil, camelina oil, camellia seed oil, castor oil, cherry kernel oil, cocoa butter, coconut oil, corn oil, cottonseed oil, evening primrose oil, grapefruit oil, grape seed oil, hazelnut oil, hempseed oil, illipe butter, lemon seed oil, lime seed oil, linseed oil, kukui nut oil, macadamia oil, maize oil, mango butter, meadowfoam oil, melon seed oil, moringa oil, mowrah butter, mustard seed oil, olive oil, orange seed oil, palm oil, palm kernel oil, papaya seed oil, passion seed oil, peach kernel oil, plum oil, pomegranate seed oil, poppy seed oil, pumpkins seed oil, rapeseed (or canola) oil, red raspberry seed oil, rice bran oil, rosehip oil, safflower oil, seabuckthorn oil, sesame oil, shea butter, soy bean oil, strawberry seed oil, sunflower oil, sweet almond oil, walnut oil, wheat germ oil); fish oils (for example: sardine oil, mackerel oil, herring oil, cod-liver oil, oyster oil); animal oils (for example: butter or conjugated linoleic acid, lard or tallow); algae oil, or any mixture or fraction thereof. The oils and fats may also have been modified by hardening, fractionation, chemical or enzymatical interesterification or by a combination of these steps.

The oil phase of the composition of the invention may be liquid at room temperature, or may be solid or partly solid at room temperature, or may be combination of both types of oil. Examples of oils that are liquid at room temperature are sunflower oil, olive oil, rapeseed oil, and other commonly known liquid vegetable oils. Examples of oils that are solid or partly solid at room temperature are coconut oil, dairy fat, and palm oil or palm oil fractions. Dairy fat is of animal origin, and most commonly is sourced from the milk of mammals like cows, sheep, and goats. These fats are preferred for use in the compositions of the invention.

Generally natural oils contain at least 80% of triglycerides. Natural oils also may contain other compounds than triglycerides, such as diglycerides, monoglycerides and free fatty acids. Also compounds like lecithin, other emulsifiers, phytosterols, phytostanols, waxes, colourants like carotenoids, vitamins like vitamin A, D, E, and K, and antioxidants like the tocopherols (vitamin E) may be present in a natural oil.

**HLB value**

HLB values are a well-known classification of surfactants or mixtures of surfactants, based on the ratio of the hydrophilic and hydrophic portions of the surfactant molecules.

The HLB value is given by the equation $HLB = 20*M_h/M$, where $M_h$ is the molecular mass of the hydrophilic part of the molecule and M is the molecular mass of the whole molecule thus giving a value on an arbitrary scale of 0 to 20. Therefore an HLB value of 0 corresponds to a completely hydrophobic molecule and an HLB value of 20 corresponds to a completely hydrophilic molecule. Typical HLB values are:

| | |
|---|---|
| 0 to 3 | an anti-foaming agent (typically in aqueous foams) |
| 4 to 6 | a water-in-oil emulsifier |
| 7 to 9 | a wetting agent |
| 8 to 18 | an oil-in-water emulsifier |
| 13 to 15 | a detergent |
| 10 to 18 | a solubiliser or a hydrotrope |

**Sucrose fatty acid ester**

The definition of sucrose fatty acid ester in the present invention are compounds which are esters of sucrose and one or more fatty acids. Sucrose is also known as table sugar and as saccharose. Sucrose is a disaccharide composed of glucose and fructose with the molecular formula $C_{12}H_{22}O_{11}$. Sucrose esters of fatty acids can be obtained by esterifying one or more of the hydroxyl group of a sucrose molecule with fatty acids. The fatty acids react with one or more hydroxyl groups to form mono, di, tri or multi-fatty acid ester, or mixtures thereof. As sucrose has 8 hydroxyl groups, the maximum number of fatty acids that is esterified to one sucrose molecule is eight, to form sucrose octa fatty acid ester. Due to the production process of the sucrose fatty acid esters (see for example EP 1 813 622 A1), a sample of sucrose fatty acid esters may comprise a mixture of mono-, di-, tri-, and multi fatty acid esters. In a commercial sample the degree of esterification generally has a distribution, therefore it is usually expressed in terms of average degree of substitution (hereinafter also referred to simply as "degree of substitution").

Preferably the sucrose fatty acid ester comprises a mixed ester or homo-ester. Suitable fatty acids may vary both in alkyl chain length and in degree of unsaturation. Suitable fatty acids are saturated fatty acids including but not limited to capric acid, lauric acid, myristic acid, palmitic acid, stearic acid, arachic acid, behenic acid, lignoceric acid or cerotic acid. Likewise, monounsaturated fatty acids including but not limited to lauroleic acid, myristoleic acid, palmitoleic acid, oleic acid, gadoleic acid or erucic acid are also suitable. Similarly, polyunsaturated fatty acids including but not limited to linoleic acid, linolenic acid, elaeostearic acid, arachidonic acid or cervonic acid are suitable too. The fatty acid is preferably selected from the group consisting of lauric acid, myristic acid, palmitic acid, stearic acid and mixtures thereof.

Sucrose fatty acid esters can also be mixtures of different compounds. In one way, mixtures of sucrose fatty acid esters may be mixtures in terms of compounds with a different degree of substitution. In a second way, mixtures of sucrose fatty acid esters may be mixtures of compounds with different types of fatty acids. Mixtures of sucrose fatty acid ester may also be mixtures according to the first and the second ways simultaneously. For example, a sucrose fatty acid ester mixture with both palmitic acid and stearic acid residues may for instance comprise sucrose monostearate, sucrose monopalmitate, sucrose distearate, sucrose dipalmitate, monopalmitoyl sucrose monostearate, dipalmitoyl sucrose monostearate, etcetera. For the purpose of this invention the term sucrose fatty acid ester is intended to include both single compounds and mixtures of single compounds according to the above two ways, unless specified otherwise.

Apart of their structure, sucrose fatty acid esters or mixtures may also be characterised by their properties. The most noteworthy property is their hydrophilic-lipophilic balance or HLB value. Sucrose esters are available with a wide range of HLB values which are controlled by the degree of esterification and the type of fatty acid used. All sucrose esters from commercial suppliers are a mixture of different fatty acids with different degrees of esterification. For example, Mitsubishi-Kagaku Foods Corporation (Tokyo, Japan) supplies amongst others L195 (sucrose laurate), S070 (sucrose stearate), S170, S270, S370, S570, S770, S970, S1670, P170 (sucrose palmitate), O-170 (sucrose oleate) and B-370 (sucrose behenate). Generally the name of the various types of commercial samples is given by the main fatty acid and the HLB value for the sucrose esters. For example, L195 contains about 95% lauric acid and another 5% are palmitic acid, stearic acid, etc, and its HLB value equals to 1. S070, S170, S270, S370, S570 are sucrose stearic acid esters with 70% stearic acid and HLB values ranging from <1, 1, 2, 3 and 5, respectively. Its HLB value increases with the increasing of the amount of mono-or di-esters. For example S170 has very little mono ester therefore its HLB value is 1. For S570, its HLB value is 5 as it contains about 30% mono ester. Especially preferred sucrose fatty acid esters for use in the present invention are S370, S570, S770, and more preferred are S370, S570, and most preferred is S370

Another supplier of suitable sucrose fatty acid esters is Sisterna BV (Roosendaal, The Netherlands). Sisterna uses a similar naming convention as Mitsubishi-Kagaku Foods Corporation.

Sucrose fatty acid esters are approved in Europe for use as food additive, and are known as E473 - sucrose esters of fatty acids.

Sucrose fatty acid esters with HLB values of 1 or 2 are known as good water-in-oil emulsifiers, to produce water-in-oil emulsion with low oil content.

**Hydrophobins**

Hydrophobins are a well-defined class of proteins (Wessels, 1997, Advances in Microbial Physiology 38: 1-45; Wosten, 2001, Annual Reviews of Microbiology 55: 625-646) that are capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad (1)$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \qquad (2)$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Streptomyces* sp. (WO 01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. *Trichoderma*), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol. 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus*; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO 01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Hydrophobins are excellent foaming agents that lead to good foamability and good foam stability of a product to which the hydrophobin is added, in products that contain water. Hydrophobins are generally rather expensive, hence the product developer has the tendency to keep the concentration of hydrophobin as low as possible. This not only leads to cost reduction, but also to saving of resources, as the production of the hydrophobin naturally costs energy.

Hydrophobins may be added to products as aqueous solution or dispersion, or may be added in dry form. In that case the hydrophobins may be freeze-dried, or may be agglomerated with a suitable material such as maltodextrin, in order to make the hydrophobin better storage stable. Such agglomerated hydrophobin may have various particle sizes.

## Composition of the invention

In a first aspect the present invention provides an edible oil composition comprising a sucrose fatty acid ester having a HLB value ranging from 1 to 7 at a concentration ranging from 1% to 20% by weight of the composition; and comprising hydrophobin at a concentration ranging from 0.01 to 1% by weight of the composition; and wherein the composition is aerated having an overrun ranging from 15% to 500%; and wherein the water content of the composition is such that the water to hydrophobin weight ratio is less than 1:5, preferably less than 1:10.

By using sucrose fatty acid ester and hydrophobin, a stable aerated edible oil can be produced, that remains stable for a long time, and with many finely divided gas bubbles. The aerated oil may remain stable and homogeneous for a period of at least 1 months, or even at least 2 months. Dependent on processing conditions, the average bubble size that may be achieved is smaller than 50 micrometer. The presence of stable air bubbles effectively prevents settling of the hydrophobin in the aerated oil.

The HLB value of the sucrose fatty acid ester is an essential feature, and the sucrose fatty acid ester has a HLB value ranging from 1 to 7. Preferably the sucrose fatty acid ester has a HLB value ranging from 1 to 6, preferably from 1 to 5, preferably from 2 to 4. More preferred the HLB value is about 3, most preferred the HLB value is 3.

Preferably the concentration of sucrose fatty acid ester ranges from 2% to 15% by weight, preferably from 4% to 12% by weight of the composition. More preferred the concentration of sucrose fatty acid ester ranges from 5% to 10% by weight of the composition.

Preferably the sucrose fatty acid ester comprises one or more compounds chosen from the group consisting of sucrose tristearate, sucrose tetrastearate, sucrose pentastearate, sucrose tripalmitate, sucrose tetrapalmitate, and sucrose pentapalmitate. More preferred the sucrose fatty acid ester comprises one or more compounds chosen from the group consisting of sucrose tetrastearate, sucrose pentastearate, sucrose tetrapalmitate, and sucrose pentapalmitate. Preferably the sucrose fatty acid ester has an ester composition wherein the amount of mono-ester is maximally 40% of the total amount of ester, preferably maximally 30%, preferably maximally 20%, preferably maximally 15%.

Aeration of the composition may be done by any method commonly known for aeration, such as an aerolatte, kenwood mixer, a BA Mixer, an Oakes mixer, a Mondomixer, or an Ultra-turrax mixer. Mixing can also be performed using in line aeration equipment, such as a pin stirrer (like a C-unit) with nitrogen or other gas inlet. The composition of the invention has an overrun ranging from 15% to 500%, preferably the overrun ranges from 20% to 400%, preferably from 30% to 250%, preferably from 40% to 250%, preferably from 50% to 250%. The composition of the invention is an aerated composition having an overrun ranging from 15% to 500%, preferably from 20% to 400%, preferably from 30% to 250%, preferably from 40% to 250%, preferably from 50% to 250%.The advantage of having a relatively high overrun, meaning an overrun of 30% or higher, is that the amount of calories when the aerated oil is used for frying is strongly reduced. Moreover, a relatively high overrun helps to keep the hydrophobin to be homogeneously dispersed in the oil. When the gas bubbles are closely packed, the continuous oil layers between the gas bubbles are rather thin, and this helps to prevent the settling of hydrophobin. Additionally a relatively high overrun also helps to reduce or stop the tendency of gas bubbles of creaming. Hence preferably the overrun ranges from 60% to 250%, more preferably from 60% to 200%.

The mixing power (and hence the shear stress applied during the aeration) influences the bubble size and the bubble size distribution. The more shear is applied, the smaller the average bubble size, and the more homogeneous the bubble size distribution. The aeration is done in such a way that preferably at least 50% of the volume of the gas in the composition is made up of gas bubbles having a volume based equivalent diameter of maximally 60 micrometer, preferably maximally 50 micrometer. More preferred at least 50% of the volume of the gas in the composition is made up of gas bubbles having a volume based equivalent diameter of maximally 40 micrometer. Preferably at least 80% of the volume of the gas in the composition is made up of gas bubbles having a volume based equivalent diameter of maximally 70 micrometer, preferably maximally 60 micrometer, preferably maximally 50 micrometer. In the context of the present invention, the 'volume based equivalent diameter' of a gas bubble is the diameter of a sphere having the same volume as the relevant gas bubble, as the gas bubbles in a composition may not be perfect spheres.

Preferably, the gas bubbles have a volume average mean bubble size d4,3 of maximally 70 micrometer, preferably maximally 60 micrometer, preferably maximally 50 micrometer. Preferably the gas bubbles in the composition have a d4,3 value ranging from 10 to 70 micrometer, preferably from 10 to 60 micrometer, preferably from 10 to 50 micrometer. More preferably the gas bubbles in the composition have a d4,3 value ranging from 20 to 70 micrometer, preferably from 20 to 60 micrometer, preferably from 20 to 50 micrometer.

Alternatively, the compositions of the invention may have an average gas bubble size which is relatively large as compared to disclosed in the previous two paragraphs. In such case a large proportion of the gas bubbles may be visible with the naked eye. In such case, preferably at least 50% of the volume of the gas in the composition is made up of gas bubbles having a volume based equivalent diameter of at least 100 micrometer, preferably at least 150 micrometer, preferably at least 200 micrometer. Preferably then the gas bubbles in the composition have a d4,3 value ranging from 100 to 300 micrometer, preferably from 100 to 200 micrometer.

Preferably the concentration of hydrophobin ranges from 0.01% by weight to 0.5% by weight based on the weight of the composition. Preferably the concentration of hydrophobin is at least 0.05% by weight, based on the weight of the composition. Preferably the concentration of hydrophobin is maximally 0.3% by weight, preferably at most 0.25% by weight based on the weight of the composition.

The hydrophobin used in the present invention can be a Class I or a Class II hydrophobin, or can be a combination of a Class I and a Class II hydrophobin. Examples of class II hydrophobins are HFBI, HFBII, and cerato-ulmin. Preferably, the hydrophobin comprises class II hydrophobin. Preferably the hydrophobin is in isolated form. Preferably the hydrophobin is soluble in water. Preferably the hydrophobin is a class II hydrophobin HFBII. The hydrophobins may be added to products in aqueous solution or dispersion, provided that the water to hydrophobin weight ratio is less than 1:5, preferably less than 1:10. The hydrophobins may also be added in dry form, preferably in spray dried form, or agglomerated with a suitable material such as maltodextrin.

The water content of the composition of the invention is low, such that the water to hydrophobin weight ratio is less than 1:5, preferably less than 1:10. That means that the water content of the composition is less than 0.2 % by weight of the compostion, preferably less than 0.1 %. During storage of the product, some moisture may migrate into the composition.

Preferably the composition according to the invention is an anhydrous composition. That means that preferably the composition does not contain free water in the form of water droplets, or the like. Nevertheless, small amounts of water may be dissolved in the composition. Although the main part of the product is edible oil, such oils may contain dissolved water, albeit at very low amounts. Hence the composition according to the invention may contain minute amounts of water dissolved in the ingredients forming the product.

The composition of the invention may contain liquid oil and structuring fat. Preferably the edible oil comprises a liquid oil and a structuring fat, and wherein the amount of structuring fat is maximally 25% by weight of the edible oil, preferably maximally 15% by weight of the edible oil. With these amounts, an aerated composition can be produced which has the correct hardness and consistency. An emulsifier may be comprised in the liquid oil fraction. Advantageously, the amount of structuring fat is relatively low, as the structuring fat generally comprises relatively high amounts of fully saturated triglycerides. The liquid oils generally contain relatively large amounts of mono- or polyunsaturated triglycerides. For the health of the consumer, it is best to keep the amount of saturated triglycerides as low as possible, while the amount of mono- or polyunsaturated triglycerides is as high as possible.

The aerated composition preferably is a free flowing composition, preferably a liquid aerated composition at room temperature, preferably a liquid aerated composition at 20°C, preferably a liquid aerated composition at 5°C. The composition may also have a higher consistency so that the composition is spoonable or can be dispensed from a flexible bottle when the bottle is compressed, for example manually compressed when dispensing the aerated oil.

The compositions according to the invention can be used for shallow frying. The advantage of the compositions, is that the spattering during heating of the composition in a pan is reduced (primary spattering, the SV1 value), as compared to a composition without air. Moreover the presence of the hydrophobin leads to strong reduction of spattering during the frying of a food product in a pan (secondary spattering, the SV2 value). The spattering values SV1 and SV2 are as defined herein below. Hence preferably the compositions according to the invention have a SV1 value as defined herein of preferably at least 5, more preferred at least 7, more preferred at least 8, and most preferred at least 9. Preferably the compositions according to the invention have a SV2 value of at least 5, more preferred at least 6.

## Method for preparation of the composition

In a second aspect the present invention provides a method for preparation of a composition according to the first aspect of the invention, comprising the steps:

a) providing a liquid mixture of an edible oil and a sucrose fatty acid ester having a HLB value ranging from 1 to 7 at a concentration ranging from 1% to 20% by weight of the composition;
b) mixing hydrophobin into the liquid mixture from step a) at a concentration ranging from 0.01 to 1% by weight of the composition; and

c) aerating the liquid mixture from step b) to an overrun ranging from 15% to 500%.

In step a) a liquid mixture is provided of a sucrose fatty acid ester and an oil. The temperature of the mixture is such that the sucrose fatty acid ester melts and can be mixed easily with the oil. In case the oil is not liquid at ambient temperature, then the mixing of the sucrose fatty acid ester and the oil can be done at such temperature that the oil becomes liquid. The actual temperature at which the mixture is liquid depends on the melting temperature of the compounds in the mixture. The temperature at which the mixing is done preferably ranges from 60°C to 90°C, preferably from 65°C to 85°C, preferably from 65°C to 80°C. The mixture may also contain structuring fat, which is also melted during the mixing operation by increasing the temperature.

In step b) the hydrophobin is added to the mixture from step a). The hydrophobin may be added as a solution or dispersion in water. The amount of water is low, such that the water to hydrophobin weight ratio is less than 1:5, preferably less than 1:10. Preferably, the hydrophobin in step b) is in dried form. Preferably, the hydrophobin may be freeze dried, or agglomerated with a suitable material, such as maltodextrin. This has the advantage that no free water is added to the composition. The temperature of the mixing is such that the mixture from step a) is liquid, hence preferably the mixing in step b) is done at the same preferred range as in step a): preferably ranging from 60°C to 90°C, preferably from 65°C to 85°C, preferably from 65°C to 80°C.

The aeration is step c) is done at such temperature that the mixture from step b) is liquid, hence preferably the mixing in step b) is done done at the same preferred range as in step a): preferably ranging from 60°C to 90°C, preferably from 65°C to 85°C, preferably from 65°C to 80°C.

Preferred aspects of the composition disclosed in here in the context of the first aspect of the invention are also applicable to the second aspect of the invention, *mutatis mutandis.*

In a third aspect the present invention provides use of a composition according to the first aspect of the invention or prepared according to the method of the second aspect of the invention to reduce spattering during shallow frying of a food product. Use of the composition for shallow frying has the advantage that spattering is reduced, when the composition is heated in a pan for shallow frying of foods or food ingredients.

Preferred aspects of the composition disclosed in here in the context of the first or second aspect of the invention are also applicable to the third aspect of the invention, *mutatis mutandis.*

## DESCRIPTION OF FIGURES

**Figure 1:** Pictures of samples taken from aerated oils containing sucrose fatty acid ester and hydrophobin with various overruns, see example 4.
**Figure 2:** Excerpts from the pictures from Figure 1, used for colour analysis, see example 4.
**Figure 3:** Average B-colour value of the images from Figure 2.

## EXAMPLES

The following non-limiting examples illustrate the present invention.

**Materials and Methodology**

*Raw materials used*

Sucrose fatty acid esters used, all supplied by Mitsubishi-Kagaku Foods Corporation (Tokyo, Japan), all analytical data obtained from supplier:

- Ryoto S070: HLB < 1, about 100% di-, tri- and polyester;
- Ryoto S170: HLB about 1, about 100% di-, tri- and polyester;
- Ryoto S270: HLB about 2, about 10% mono-ester, and about 90% di-, tri- and polyester;
- Ryoto S370: HLB about 3, about 20% mono-ester, and about 80% di-, tri- and polyester;
- Ryoto S570: HLB about 5, about 30% mono-ester, and about 70% di-, tri- and polyester;
- Ryoto S770: HLB about 7, about 40% mono-ester, and about 60% di-, tri- and polyester
- Ryoto S970: HLB about 9, about 50% mono-ester, and about 50% di-, tri- and polyester

All these esters contain at least 70% of the fatty acids is stearic acid.
Typical ester analysis based on HLB value :

HLB 1: ~1% mono, ~4% di, ~7% tri, ~13% tetra, ~28% penta, ~24% hexa, ~23% hepta and higher.
HLB 3: ~18% mono, ~32% di, ~29% tri, ~16% tetra, ~5% penta and higher.
HLB 7: ~37% mono, ~45% di, ~16% tri, ~2% tetra and higher.

Other raw materials

• Sunflower oil, supplier Cargill (Amsterdam, Netherlands);
• Coconut oil, supplier Brenntag Eurochem GmbH (Duisburg, Germany);
• Cocoa butter, supplier Barry Callebaut (Zundert, Netherlands);
• Structuring fat: a mixture of interesterified oils: 65% of stearine fraction of dry fractioned palm oil with a melting point of 65°C, and 35% of palm kernel oil (65dfPOs52mp/35PK); supplier Sime Darby Unimills (Zwijndrecht, Netherlands);
• Beta-carotene: 0.4% dispersion in edible oil; supplier Allied Biotech Corp., (Karlsruhe, Germany);
• Water: local tap water;
• 'HFBII aq': Class II Hydrophobin HFBII ex Danisco (Copenhagen, Denmark), produced by the fungus *Trichoderma reesei,* and isolated from fermentation broth. Concentration is 13.8 wt% of HFBII in aqueous solution, pH about 4.5, buffered with ammonium salt.
• 'HFBII dry': Class II Hydrophobin HFBII ex Danisco (Copenhagen, Denmark), prepared by drying and agglomeration of 'HFBII aq', using Glucidex 28DE maltodextrin (ex Roquette, Lestrem, France). Particle sizing was performed using Malvern Mastersizer. The properties of 'HFBII dry' are:

| | |
|---|---|
| HFBII concentration [wt%] | 60% |
| Maltodextrin concentration [wt%] | 20% |
| Bulk density [kg/cm$^3$] | 0.33 |
| Average particle size [D50, micrometer] | 28.0 |
| Span [-] | 2.85 |

*Primary and Secondary Spattering Tests of Emulsions and Compositions*

Primary spattering (SV1) is assessed under standardised conditions in which an aliquot of a food product is heated in a glass dish and the amount of fat spattered onto a sheet of paper held above the dish is assessed after the water content of the food product has been evaporated by heating.

Secondary spattering (SV2) is assessed under standardised conditions in which the amount of fat spattered onto a sheet of paper held above the dish is assessed after injection of a quantity of 10 milliliter water into the dish.

In assessment of both primary and secondary spattering values, 25 gram food product is heated in a 15 cm diameter glass bowl on an electric plate to about 205°C. The oil or fat that spatters out by force of expanding evaporating water droplets is caught on a sheet of paper situated at 25 cm above the pan (SV1 test). Subsequently a quantity of 10 milliliter water is poured into the bowl and again the fat that spatters out of the glass bowl by force of expanding evaporating water droplets is caught on a sheet of paper situated above the pan (SV2 test).

The images on the paper sheets as obtained are compared with a set of standard pictures, numbered 0-10, whereby the number of the best resembling picture is recorded as the spattering value. 10 indicates no spattering and 0 indicates very high spattering. The standard scoring method is as indicated in table 1.

**Table 1** Standard scoring table for spattering values SV1 and SV2

| *Score* | *Comments* |
|---|---|
| 10 | Excellent |
| 8 | Good |
| 6 | Passable |
| 4 | Unsatisfactory for SV1, almost passable for SV2 |
| 2 | Very poor |

Typical results for household margarines (-80 wt% fat) are 8.5 for primary spattering (SV1) and 4.6 for secondary spattering (SV2) under the conditions of the above mentioned test.

**Example 1: Influence of HLB value of sucrose fatty acid ester on foaming of oil**

In order to study the effect of HLB of sucrose fatty acid ester on aeration, stearate esters with different esterification degrees (S070 to S970, the HLB value increases from <1 to 9) were investigated by aerating sunflower oil, or cocoa butter, or coconut oil at 65°C. Sucrose esters (S070 to S970) all have a similar melting temperature around 61 °C, and they were mixed with sunflower oil (at a concentration of 10 wt%) by heating a mixture of 100 mL of oil and emulsifier solution in a beaker (400 mL) up to 70°C in an oven. The mix was then equilibrated for 1 hour at 70°C. Aeration was done using a hand held whisk (Krups), at the maximum speed for 5 minutes at 70°C. The overrun as function of the HLB value and their residues (i.e. non-soluble material) in the oils are listed in the following table.

Table 2 The overrun of different emulsifiers in sunflower oil, cocoa butter, or coconut oil at 10 wt% concentration.

| Emulsifier | S070 | S170 | S270 | S370 | S570 | S770 | S970 |
|---|---|---|---|---|---|---|---|
| HLB | <1 | 1 | 2 | 3 | 5 | 7 | 9 |
| *Sunflower oil* | | | | | | | |
| Residue [wt%] at 70°C | 0 | 0 | 1.66 | 2.91 | 7.57 | ~10 | n/a * |
| Aeration overrun [%] | 8 | 45 | 180 | 290 | 100 | -0 | n/a |
| *Cocoa butter* | | | | | | | |
| Residue [wt%] at 70°C | n/a | 0 | 8 | 1.2 | 5.0 | 8.0 | 8.5 |
| Aeration overrun [%] | n/a | 5 | 186 | 211 | 139 | 17 | 1 |
| *Coconut oil* | | | | | | | |
| Residue [wt%] at 70°C | n/a | 0 | 1.0 | 1.6 | 5.0 | n/a | 8.0 |
| Aeration overrun [%] | n/a | 0 | 82 | 198 | 48 | n/a | 0 |
| *: 'n/a' is not measured | | | | | | | |

With the increase of HLB value the foaming capability increased, reaching a maximum overrun for S370 for all oils. When HLB reaches 5 for S570, the aeration capability begins to decrease. The residues in the oils increase with the increase of HLB value, meaning that the amount of material that does not dissolve in oil increases. It depends on the actual oil what the maximum HLB value of the sucrose fatty acid ester that still works for aeration.

**Example 2: Influence of concentration of sucrose fatty acid ester on aeration of oil**

The concentration of sucrose fatty acid ester Ryoto S370 was varied in order to investigate the influence on the overrun of aerated oil. The following procedure was applied.

1. 50g samples with different concentrations of S370 in sunflower oil were heated in an oven at 70°C for 2 hours;
2. The samples were directly aerated at 70° using Ultra Turrax T 25 high shear mixer (supplier: IKA®-Werke GmbH & Co. KG, Staufen, Germany), during two minutes at a speed of 13,500 min$^{-1}$.
3. The experiments were done in triplicate.

The following results were obtained (average of the triplicates) for a batch aeration operation:

Table 3 The overrun in sunflower oil, as function of concentration of sucrose fatty acid ester Ryoto S370.

| Concentration Ryoto S370 [wt%] | overrun [%] |
|---|---|
| 2 | 4.5 |
| 5 | 22.9 |
| 10 | 36.9 |
| 15 | 62.6 |
| 20 | 82.6 |
| 25 | 92.8 |

(continued)

| Concentration Ryoto S370 [wt%] | overrun [%] |
|---|---|
| 30 | 91.0 |

This shows that in this test the overrun increases until a maximum is achieved at 25 wt%.

Additionally tests with Ryoto S370 in sunflower oil were performed in a continuous flow system, wherein a flow of oil combined with sucrose fatty acid ester is continuously aerated by input of a continuous nitrogen flow. Aeration and mixing of the gas with oil was conducted using a C-unit pin-stirrer. The C-unit is a piece of equipment commonly used in production of water-in-oil emulsions. In this case the C-unit is in the form of a cylinder with an internal volume of 100 mL, and is equipped with a pin stirrer that continuously rotates. Rotation at different speeds is possible. The input to the pin stirrer consists of a premix of oil with additives and this premix is mixed with a nitrogen flow just prior to entry into the C-unit. The premix is continuously aerated with nitrogen in this way. The output from the C-unit is aerated oil with additives. By varying the aeration parameters, different overrun and bubble size of oil mousses can be achieved. Five parameters were varied in these tests:

1. concentration S370 in oil (2, 5, 10 wt%);
2. rotation speed of C-unit (500, 1500, 2500 rpm);
3. aeration temperature (65, 70, 80°C);
4. nitrogen gas flow rate (2, 7.5, 15 normal L/h);
5. oil/sucrose fatty acid ester flow rate (2, 4, 7.5 L/h).

From these experiments follows that the parameters that determine the overrun the most, are the concentration of sucrose fatty acid ester in oil, and the gas flow rate (the latter especially in volume ratio to the oil/sucrose fatty acid ester flow rate). The other 3 parameters only have a minor influence on the overrun that can be obtained. As an example, the following data are presented, combining overrun data for various rotation speeds, aeration temperatures, and rotation speeds. All measurements are done in duplicate, and the average overrun of these two measurements is presented as well.

Table 4 Overrun (in duplicate) as function of concentration of Ryoto S370 in sunflower oil, and volume ratio oil-SFAE to nitrogen, rotation speed, temperature.

| concentration of S370 in oil [wt%] | rotation speed C-unit [min⁻¹] | temperature [°C] | oil-SFAE flow rate [L/h] | gas flow rate [N L/h] | volume ratio nitrogen to oil-SFAE mix [vol/vol] | overrun 1 [%] | overrun 2 [%] | average overrun [%] |
|---|---|---|---|---|---|---|---|---|
| 5.0 | 500 | 70 | 7.5 | 2.0 | 0.27 | 25 | 31 | 28 |
| 2.0 | 2500 | 70 | 4.0 | 2.0 | 0.50 | 41 | 43 | 42 |
| 10.0 | 1500 | 80 | 4.0 | 2.0 | 0.50 | 87 | 70 | 79 |
| 2.0 | 500 | 80 | 7.5 | 7.5 | 1.00 | 112 | 88 | 100 |
| 5.0 | 2500 | 80 | 2.0 | 2.0 | 1.00 | 101 | 104 | 103 |
| 2.0 | 1500 | 70 | 4.0 | 7.5 | 1.88 | 82 | 98 | 90 |
| 2.0 | 2500 | 80 | 7.5 | 15.0 | 2.00 | 103 | 87 | 95 |
| 5.0 | 1500 | 70 | 7.5 | 15.0 | 2.00 | 110 | 116 | 113 |
| 5.0 | 1500 | 80 | 2.0 | 7.5 | 3.75 | 200 | 200 | 200 |
| 10.0 | 500 | 80 | 4.0 | 15.0 | 3.75 | 364 | 329 | 346 |
| 10.0 | 2500 | 70 | 2.0 | 7.5 | 3.75 | 248 | 395 | 321 |
| 10.0 | 500 | 70 | 2.0 | 15.0 | 7.50 | 315 | 446 | 381 |

These data show that the overrun as measured here can reach values up to nearly 400%. The highest overruns are obtained when the volume ratio between oil-sucrose fatty acid ester and gas is relatively high.

**Example 3: Preparation of aerated oil with sucrose ester Ryoto S370 and hydrophobin**

The following procedure was applied to prepare aerated oil with Ryoto S370 and hydrophobin. The S370 was weighted and mixed with sunflower oil. The mixture was heated to 70°C in an oven until the solution was clear. Filtration was done by pre-warming the filter paper at 70°C and filter the mixture at 70°C in the oven. The S370 concentration after filtration was calculated on the basis of the mass added into the oil subtracting the residue mass after separation. The solution was diluted to the required concentration by adding sunflower oil for further use. The flavours, colourants, and hydrophobin were added to the solution and mixed together. Aeration and mixing of the gas with oil was conducted using a C-unit pin-stirrer, similar as in example 2. The compositions of the oils for aeration were the following.

**Table 5** Compositions of oils for aeration.

| | | | Composition of Unaerated Premix Sample [wt%] | | |
|---|---|---|---|---|---|
| Ingredient | #516 | #614 | #100 | #200 | #300 |
| | | | *According to the invention* | *According to the invention* | *According to the invention* |
| sunflower oil | 92.5 | 85.05 | 94.5 | 94.5 | 94.5 |
| structuring fat | | 9.45 | 0 | 0 | 0 |
| Ryoto S370 | 7 | 5 | 5 | 5 | 5 |
| beta-carotene | 0.15 | 0.15 | 0.15 | 0.15 | 0.15 |
| flavours | 0.015 | 0.015 | 0.015 | 0.015 | 0.015 |
| HFBII aq | | | 0.36 (0.05 wt% HFBII) | 0.72 (0.1 wt% HFBII) | |
| HFBII dry | | | | | 0.006 (0.0036 wt% HFBII) |

The pin stirrer in the C-unit for aeration was kept at a rotation speed of 2,500 rpm in all cases, and the temperature at which the oil was aerated in the C-unit was 70°C in all experiments. The following results were obtained for aeration of these compositions:

**Table 6** Process settings for preparation of aerated oils from Table 5, and resulting overruns.

| | Premix Sample | | | | | |
|---|---|---|---|---|---|---|
| | #516-1 | #614 | #516-2 | #100 | #200 | #300 |
| *Process settings* | | | | | | |
| Flow rate of oil premix (L/h) | 2 | 4 | 2 | 2 | 2 | 2 |
| Nitrogen gas flow rate (normal L/h*) | 4 | 4 | 2 | 2 | 2 | 2 |
| *Resulting gas fractions* | | | | | | |
| overrun [%] | 201 | 107 | 122 | 135 | 133 | 111 |
| volumetric gas fraction [%] | 67 | 52 | 55 | 58 | 57 | 53 |
| *: at atmospheric pressure and room temperature | | | | | | |

These results indicate that the overrun that is obtained can be well controlled, by adjusting the flow rates of oil and gas. The gas bubble size that was obtained in the samples generally was smaller than 50 micrometer, which was observed by microscopy. The gas bubbles were so small that they could not be observed with the naked eye. The aerated compositions were stable, and could be kept in storage at 5°C up to at least 2 months.

Similar experiments were conducted with a rotation speed of the pin stirrer of the C-unit of 1,500 rpm. Stable aerated compositions could be prepared, which had a somewhat larger average bubble size, as observed by microscopy. The samples prepared at 2,500 rpm were more homogeneous with respect to the bubble size than samples prepared at 1,500 rpm.

**Example 4: Stability of aerated oil with sucrose fatty acid ester and hydrophobin**

The stability of aerated oil containing hydrophobin and Ryoto S370 with various overruns was determined using the following procedure. Ryoto S370 was mixed with sunflower oil at a concentration of 7 wt%. The mixture was heated to 70°C in an oven until the solution was clear. Filtration was done by pre-warming the filter paper at 70°C and then filtering the mixture at 70°C in the oven. 'HFB dry' was added at a concentration of 0.167 wt% to obtain an HFBII concentration in the mixture of 0.1 wt%. Two samples were prepared with either only 'HFB dry' added or only Ryoto S370 added.

The mixtures of each about 100 milliliter were aerated at a temperature of 75°C using an Ultra Turrax T 25 high shear mixer (supplier: IKA®-Werke GmbH & Co. KG, Staufen, Germany), at a rotation speed of 13,500 min$^{-1}$. The mixing time was varied in order to obtain various overruns. The mixing was done in a cylinder, such that aerated samples were obtained with a volume of about 100 milliliter, which are relative high and narrow. After the foams were prepared, the foams were kept in storage at 5°C for 1 day. After 1 day storage each foam was divided in 4 equal parts of 25 milliliter, to make a vertical stratification of samples from each foam: top, upper middle, lower middle, bottom. Each of these 4 samples was analysed for the presence of hydrophobin in the samples. This analysis was done by heating each sample of 25 milliliter in a petri-dish to a temperature of 205°C during 5 minutes. By the heating, the gas bubbles disappeared from the sample, to obtain a non-foamed oil. The hydrophobin in the samples could be visually observed, as the hydrophobin was dispersed in the samples, and the view to the sample was not limited due to the presence of gas bubbles anymore. Additionally due to the heating, the hydrophobin protein and/or maltodextrin turns yellowish/brownish, probably due to a Maillard reaction. By this visual observation, it can be determined whether the hydrophobin is still homogeneously dispersed in the foams, or whether it has settled to one of the lower parts of the foam. In case the four samples from one foam formulation all have similar yellowness/brownness, then the hydrophobin is considered to be evenly distributed. In case one or more of the samples (notably the bottom sample) have a yellowness/brownness which is very different from the other sample(s) (notably the top sample), then the hydrophobins are not homogeneously distributed anymore, as they have settled to the bottom part.

The homogeneity of the foams has been determined by analysis of the colour of each of the four samples taken from one cylinder with foam. Digital pictures have been taken of each of the petri-dishes using a Fuji FinePix A345 camera with 4.1 megapixels; automatic camera settings were used: The colour analysis of the pictures has been done using the website http://mkweb.bcgsc.ca/color_summarizer/?analyze on 14th May 2012. This tool determines the red, green and blue (RGB) values of an image, wherein R, G, and B each can range from a value of 0 to 255. If the R, G, B values each are 0, then the complete picture is black, while when the R, G, B values each are 255, then the complete picture is white. The RGB values are based on the RGB colour model.

The following samples have been produced, with various overruns, as indicated in the next table.

**Table 7** Composition and overrun of various samples.

| sample# | concentration S370 [wt%] | concentration HFBII [wt%] | overrun [%] |
|---|---|---|---|
| #0 | 0 | 0 | 0 |
| #4 | 7 | 0 | 0 |
| #5 | 0 | 0.1 | 0 |
| #16 | 7 | 0.1 | 0 |
| #17 | 7 | 0.1 | 10 |
| #18 | 7 | 0.1 | 50 |
| #19 | 7 | 0.1 | 75 |
| #20 | 7 | 0.1 | 100 |

Sample #4 which does not contain sucrose fatty acid ester could not be aerated using this method. When this sample was mixed using the Ultra turrax, a small foamy layer was formed on top of the sample. This thin foamy layer was not stable though and disappeared almost instantaneously. The sucrose fatty acid ester is required to obtain a stable aerated oil.

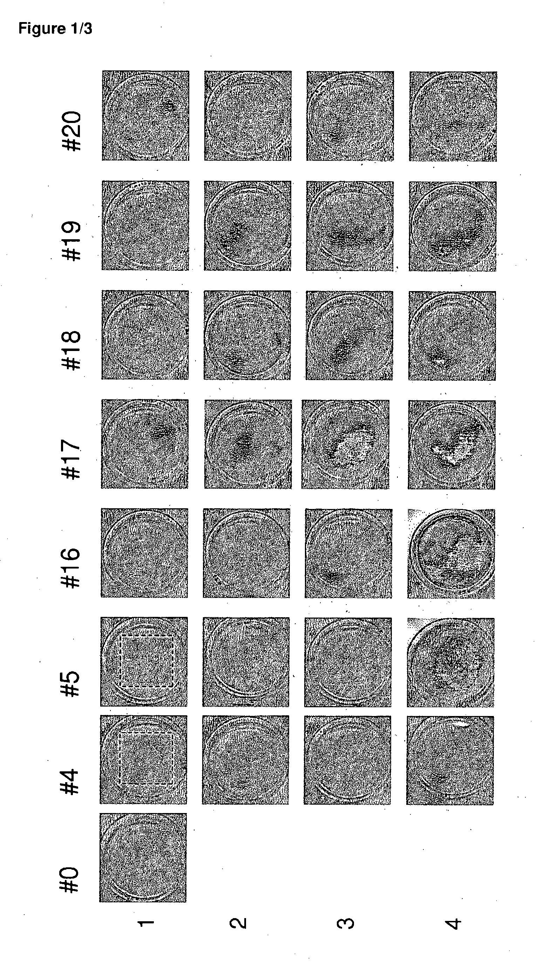

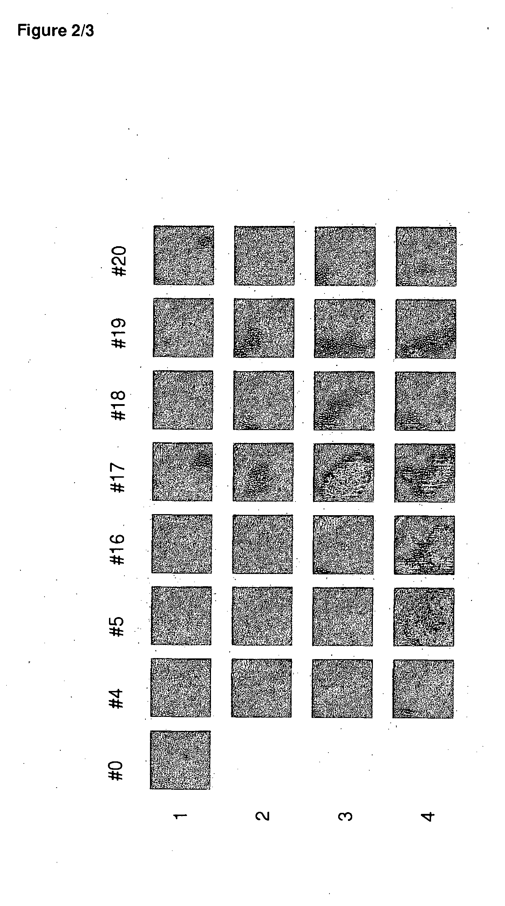

As described above, after storage for 1 day, the foams were divided in four parts, heated in petri-dishes, and pictures were made. These pictures for the samples as described in Table 7 are given in Figure 1. The pictures in row labelled '1' are the samples of the top of the foams, the pictures in row labelled '2' are the samples of the upper middle of the foams, the pictures in row labelled '3' are the samples of the lower middle of the foams, and the pictures in row labelled '4' are the samples of the bottom of the foam samples. For illustration purposes, the images in row 1 of samples #4 and #5 contain a box: this box indicates a typical excerpt that was taken from each image (from the centre of the petri-dish) in order to evaluate the colour of the excerpts. An excerpt was taken from each of the pictures in Figure 1. The images created this way are shown in Figure 2.

From the images in Figure 1, the following can be observed. Sample #0 is pure sunflower oil, and this sample is shown for illustration purposes only. Sample #4 (with Ryoto S370, and without hydrophobin) shows that clear oil is obtained in each of the samples, obviously without hydrophobin. Sample #5 and #16, which are not aerated, indicate that the hydrophobin settles to the bottom, as the bottom sample contains most of the hydrophobin (images are most yellow as compared to the samples higher in the foams). Sample #17 has an overrun of about 10%, and already shows a more homogeneous distribution of hydrophobin over the four samples of this foam, compared to foams #5 and #16. Nevertheless the samples in rows 3 and 4 are more yellow/brown than the samples in rows 1 and 2. This means that more hydrophobin is present in the bottom layers than in the top layers in sample #17. The samples #18, #19, and #20 with high overrun (50% or more) show a similar colour yellow across the height of the foam, meaning that the hydrophobin remains homogeneously distributed over the foam during storage. This means that air bubbles are required to stabilise the aerated oil, and to keep the hydrophobin homogeneously distributed. Please note that the samples #18, #19, and #20 with the high overrun are in total less yellow/brown than the samples #16 and #17. The overall volume of each sample in a petri-dish is the same in all cases (25 mL), meaning that when the overrun is high, the total amount of hydrophobin in the samples is relatively low, leading to a less pronounced yellow/brown colour.

The yellow/brown colour of each sample was quantified using the RGB colour value analysis described above, using the images in Figure 2. By the quantification, a more objective picture can be sketched of the stability of the samples, without relying on the human's eye assessment of the pictures only. The average R, G, and B values of each image as determined are given in the following table.

**Table 8** Colour analysis of images in Figure 2.

| sample | layer | average R | average G | average B |
|---|---|---|---|---|
| #0 (oil) | 1 | 170 | 170 | 164 |
| #4 (oil + S370) | 1 | 176 | 172 | 156 |
|  | 2 | 181 | 177 | 161 |
|  | 3 | 175 | 174 | 165 |
|  | 4 | 171 | 170 | 160 |
| #5 (oil + HFBII) | 1 | 173 | 173 | 166 |
|  | 2 | 174 | 174 | 166 |
|  | 3 | 172 | 172 | 164 |
|  | 4 | 183 | 133 | 33 |
| #16 (oil + S370 + HFBII) | 1 | 180 | 172 | 144 |
|  | 2 | 183 | 175 | 144 |
|  | 3 | 180 | 175 | 145 |
|  | 4 | 189 | 149 | 49 |
| #17 (oil + S370 + HFBII) | 1 | 182 | 167 | 119 |
|  | 2 | 181 | 165 | 116 |
|  | 3 | 183 | 152 | 77 |
|  | 4 | 179 | 157 | 97 |
| #18 (oil + S370 + HFBII) | 1 | 180 | 170 | 144 |
|  | 2 | 180 | 170 | 137 |
|  | 3 | 177 | 164 | 124 |
|  | 4 | 179 | 166 | 126 |
| #19 (oil + S370 + HFBII) | 1 | 181 | 169 | 142 |
|  | 2 | 181 | 167 | 136 |
|  | 3 | 175 | 166 | 141 |
|  | 4 | 177 | 165 | 125 |
| #20 (oil + S370 + HFBII) | 1 | 174 | 168 | 147 |
|  | 2 | 181 | 170 | 142 |

(continued)

| sample | layer | average R | average G | average B |
|---|---|---|---|---|
| | 3 | 178 | 167 | 132 |
| | 4 | 180 | 168 | 131 |

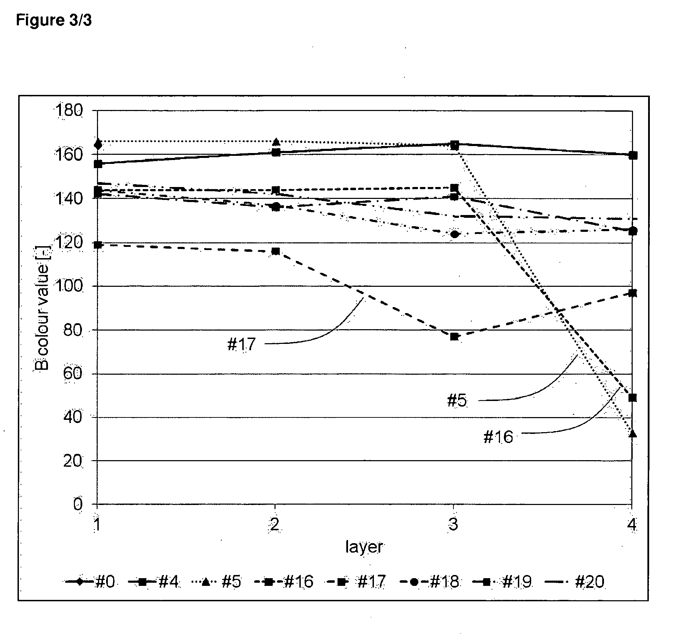

It appears that especially the B value is sensitive to the yellow/brown colour of the image. This means that when the B value of an image from one or two of the layers differs from the other layers (from the same foam sample), then the hydrophobin is not homogeneously distributed in the foam. The average B value has been plotted as function of the layer and the sample in Figure 3. This plot indeed shows that in samples #5 and #16, the B value of the image from layer 4 is much lower than of the images of the other layers. This shows that the yellowness of these images from layer 4 is higher than from the other layers, meaning that hydrophobin has settled to layer 4. The samples #5 and #16 are not homogeneous. For sample #17 it is shown that the B-value of the images from layers 3 and 4 is lower than those of layers 1 and 2. Also in this case, the sample is not completely homogeneous. For samples #18, #19, and #20, the curve is rather flat, meaning that the B-value of the 4 samples across the height of the foam remains rather constant, meaning that the hydrophobin is still homogeneously distributed over the foam after storage.

**Example 5: Spattering tests of aerated oils**

The aerated oils produced in example 3 were used in spattering tests:

**Table 9** Measured primary and secondary spattering values (SV1, SV2) of oils from example 3.

| Sample | storage condition prior to test | vol. gas fraction [%] | weight of product used for test [g] (all 20g oil) | SV1 | SV2 |
|---|---|---|---|---|---|
| 1st set of experiments | | | | | |
| Reference Blue Band* | at 15°C | 0 | 25 | 8.5[#] | 5[#] |
| pure sunflower oil | at 70°C | 0 | 20 | 10 | 0 |
| 5% S370 in sunflower oil (unaerated) | at 70°C | 0 | 21 | 10 | 5.5 |
| #516-1 | at 5°C | 67 | 21 | 10 | 5.5 |
| #614 | at 5°C | 52 | 21 | 10 | 4.5 |
| 2nd set of experiments | | | | | |
| Reference Blue Band* | at 15°C | 0 | 25 | 7[#] | 6[#] |
| #516-2 | at 5°C | 55 | 21 | 10 | 3.5 |
| #100 | at 5°C | 58 | 21 | 10 | 6.5 |
| #200 | at 5°C | 57 | 21 | 10 | 6 |
| #300 | at 5°C | 53 | 21 | 10 | 6 |
| * Reference is commercially available Blue Band wrapper margarine with about 79% fat, contains lecithin as anti-spattering agent (ex Unilever, Rotterdam, Netherlands).<br>[#] This difference between the reference samples is determined by having done the tests at various days, with different reference samples. The quality of the lecithin (major anti-spattering agent) in the commercial samples varies from batch to batch, with a large influence on the anti-spattering behaviour. | | | | | |

These results show that for all oils primary spattering (represented by SV1) does not occur. These samples are free from water, hence this cannot lead to spattering. The addition of sucrose fatty acid ester (e.g. samples #516-1, #614, #516-2) strongly reduces secondary spattering. The addition of hydrophobin (samples #100, #200, #300) in the second set of experiments leads to further improvement of the suppression of secondary spattering.

Additionally the aerated oils produced in example 4 were used in spattering tests:

**Table 10** Measured primary and secondary spattering values (SV1, SV2) of aerated oils from example 4.

| Sample | overrun | SV1 | SV2 |
|---|---|---|---|
| 0 (oil) | 0 | 10 | 0 |
| 4 (oil + S370) | 0 | 10<br>10 | 4<br>5 |
| 5 (oil + HFBII) | 0 | 10 | 8 |
| 16 (oil + S370 + HFBII) | 0 | 10<br>10 | 8.5<br>9.5 |
| 17 (oil + S370 + HFBII) | 10 | 10<br>10 | 8<br>10 |
| 18 (oil + S370 + HFBII) | 50 | 10<br>10 | 8.5<br>9.5 |
| 19 (oil + S370 + HFBII) | 75 | 10 | 9 |
| 20 (oil + S370 + HFBII) | 100 | 10 | 8.5 |

These data show that the presence of the gas bubbles, sucrose fatty acid ester, and hydrophobin leads to very high SV2 values. This means that the compositions of the invention are excellent for use in shallow frying, to prevent spattering during frying of food products such as meat and/or vegetables.

**Claims**

1. An edible oil composition comprising a sucrose fatty acid ester having a HLB value ranging from 1 to 7 at a concentration ranging from 1% to 20% by weight of the composition; and
comprising hydrophobin at a concentration ranging from 0.01 to 1% by weight of the composition; and
wherein the composition is aerated having an overrun ranging from 15% to 500%; and wherein the water content of the composition is such that the water to hydrophobin weight ratio is less than 1:5, preferably less than 1:10.

2. A composition according to claim 1, wherein the sucrose fatty acid ester has a HLB value ranging from 1 to 6, preferably from 1 to 5, preferably from 2 to 4.

3. A composition according to claim 1 or 2, wherein the concentration of sucrose fatty acid ester ranges from 2% to 15% by weight, preferably from 4% to 12% by weight of the composition.

4. A composition according to any of claims 1 to 3, wherein the sucrose fatty acid ester comprises one or more compounds chosen from the group consisting of sucrose tristearate, sucrose tetrastearate, sucrose pentastearate, sucrose tripalmitate, sucrose tetrapalmitate, and sucrose pentapalmitate.

5. A composition according to any of claims 1 to 4, wherein the sucrose fatty acid ester has an ester composition wherein the amount of mono-ester is maximally 40% of the total amount of ester, preferably maximally 30%, preferably maximally 20%, preferably maximally 15%.

6. A composition according to any of claims 1 to 5, wherein the overrun ranges from 15% to 500%, preferably from 20% to 400%, preferably from 30% to 250%, preferably from 40% to 250%, preferably from 50% to 250%.

7. A composition according to any of claims 1 to 6, wherein at least 50% of the volume of the gas in the composition is made up of gas bubbles having a volume based equivalent diameter of maximally 60 micrometer, preferably maximally 50 micrometer.

8. A composition according to any of claims 1 to 7, wherein the gas bubbles have a volume average mean bubble size d4,3 of maximally 70 micrometer, preferably maximally 60 micrometer, preferably maximally 50 micrometer.

9.  A composition according to any of claims 1 to 8, wherein the concentration of hydrophobin ranges from 0.01% by weight to 0.5% by weight based on the weight of the composition.

10. A composition according to any of claims 1 to 9, wherein the hydrophobin comprises class II hydrophobin.

11. A composition according to any of claims 1 to 10, wherein the composition is an anhydrous composition.

12. A composition according to any of claims 1 to 11, wherein the edible oil comprises a liquid oil and a structuring fat, and wherein the amount of structuring fat is maximally 25% by weight of the edible oil, preferably maximally 15% by weight of the edible oil.

13. A method for preparation of a composition according to any of claims 1 to 12, comprising the steps:

    a) providing a liquid mixture of an edible oil and a sucrose fatty acid ester having a HLB value ranging from 1 to 7 at a concentration ranging from 1% to 20% by weight of the composition;
    b) mixing hydrophobin into the liquid mixture from step a) at a concentration ranging from 0.01 to 1% by weight of the composition; and
    c) aerating the liquid mixture from step b) to an overrun ranging from 15% to 500%.

14. A method according to claim 13, wherein the hydrophobin in step b) is in dried form.

15. Use of a composition according to any of claims 1 to 12 or prepared according to the method of claim 13 or 14 to reduce spattering during shallow frying of a food product.

**Patentansprüche**

1.  Essbare Ölzusammensetzung, umfassend einen Sucrose-Fettsäureester mit einem im Bereich von 1 bis 7 liegenden HLB-Wert in einer im Bereich von 1 Gew.-% bis 20 Gew.-% der Zusammensetzung liegenden Konzentration; und umfassend Hydrophobin in einer im Bereich von 0,01 Gew.-% bis 1 Gew.-% der Zusammensetzung liegenden Konzentration; und
    wobei die Zusammensetzung mit einem Überlauf im Bereich von 15% bis 500% mit Luft durchsetzt ist; und
    wobei der Wassergehalt der Zusammensetzung derart ist, dass das Gewichtsverhältnis von Wasser zu Hydrophobin weniger als 1:5 beträgt, vorzugsweise weniger als 1:10.

2.  Zusammensetzung gemäß Anspruch 1, wobei der Sucrose-Fettsäureester einen im Bereich von 1 bis 6, vorzugsweise von 1 bis 5, vorzugsweise von 2 bis 4 liegenden HLB-Wert aufweist.

3.  Zusammensetzung gemäß Anspruch 1 oder 2, wobei die Konzentration des Sucrose-Fettsäureesters im Bereich von 2 Gew.-% bis 15 Gew.-%, vorzugsweise von 4 Gew.-% bis 12 Gew.-% der Zusammensetzung liegt.

4.  Zusammensetzung gemäß irgendeinem der Ansprüche 1 bis 3, wobei der Sucrose-Fettsäureester eine oder mehrere Verbindungen ausgewählt aus der Gruppe bestehend aus Sucrosetristearat, Sucrosetetrastearat, Sucrosepentastearat, Sucrosetripalmitat, Sucrosetetrapalmitat und Sucrosepentapalmitat umfasst.

5.  Zusammensetzung gemäß irgendeinem der Ansprüche 1 bis 4, wobei der Sucrose-Fettsäureester eine Esterzusammensetzung aufweist, in welcher die Menge von Mono-Ester maximal 40% der gesamten Menge von Ester beträgt, vorzugsweise maximal 30%, vorzugsweise maximal 20%, vorzugsweise maximal 15%.

6.  Zusammensetzung gemäß irgendeinem der Ansprüche 1 bis 5, wobei der Überlauf im Bereich von 15 bis 500% liegt, vorzugsweise von 20% bis 400%, vorzugsweise von 30% bis 250%, vorzugsweise von 40% bis 250%, vorzugsweise von 50% bis 250%.

7.  Zusammensetzung gemäß irgendeinem der Ansprüche 1 bis 6, wobei mindestens 50% des Volumens des Gases in der Zusammensetzung von Gasblasen erzeugt wird, die einen Volumenäquivalent-basierten Durchmesser von maximal 60 Mikrometer haben, vorzugsweise maximal 50 Mikrometer.

8.  Zusammensetzung gemäß irgendeinem der Ansprüche 1 bis 7, wobei die Gasblasen eine Volumen-gemittelte durchschnittliche Blasengröße d4,3 von maximal 70 Mikrometer, vorzugsweise maximal 60 Mikrometer, vorzugsweise maximal 50 Mikrometer haben.

9. Zusammensetzung gemäß irgendeinem der Ansprüche 1 bis 8, wobei die Konzentration von Hydrophobin im Bereich von 0,01 Gew.-% bis 0,5 Gew.-%, bezogen auf das Gewicht der Zusammensetzung liegt.

10. Zusammensetzung gemäß irgendeinem der Ansprüche 1 bis 9, wobei das Hydrophobin Klasse II Hydrophobin umfasst.

11. Zusammensetzung gemäß irgendeinem der Ansprüche 1 bis 10, wobei die Zusammensetzung eine wasserfreie Zusammensetzung ist.

12. Zusammensetzung gemäß irgendeinem der Ansprüche 1 bis 11, wobei das essbare Öl ein flüssiges Öl und ein strukturierendes Fett umfasst und wobei die Menge von strukturierendem Fett maximal 25 Gew.-% des essbaren Öls beträgt, vorzugsweise 15 Gew.-% des essbaren Öls.

13. Verfahren zur Herstellung einer Zusammensetzung gemäß irgendeinem der Ansprüche 1 bis 12, umfassend die Schritte:

a) Bereitstellen einer flüssigen Mischung aus einem essbaren Öl und einem Sucrose-Fettsäureester mit einem im Bereich von 1 bis 7 liegenden HLB-Wert in einer im Bereich von 1 Gew.-% bis 20 Gew.-% der Zusammensetzung liegenden Konzentration; und
b) Mischen von Hydrophobin in die flüssige Mischung aus Schritt a) in einer im Bereich von 0,01 Gew.-% bis 1 Gew.-% der Zusammensetzung liegenden Konzentration; und
c) Durchsetzen der flüssigen Mischung aus Schritt b) mit Luft bis zu einem Überlauf im Bereich von 15% bis 500%.

14. Verfahren gemäß Anspruch 13, wobei das Hydrophobin in Schritt b) in getrockneter Form vorliegt.

15. Verwendung einer Zusammensetzung gemäß irgendeinem der Ansprüche 1 bis 12 oder hergestellt gemäß dem Verfahren von Anspruch 13 oder 14, um Spritzen während des Anbratens eines Lebensmittelproduktes in einem flachen Gefäß zu verringern.

**Revendications**

1. Composition d'huile comestible comprenant un ester d'acide gras de sucrose ayant une valeur HLB (valeur d'équilibre hydrophile/lipophile) située dans la plage de 1 à 7 à une concentration située dans la plage de 1 % à 20 % en poids de la composition ; et
comprenant de l'hydrophobine à une concentration située dans la plage de 0,01 à 1 % en poids de la composition ; et
laquelle composition est aérée avec un taux de foisonnement situé dans la plage de 15 % à 500 % ; et
dans laquelle la teneur en eau de la composition est telle que le rapport pondéral de l'eau à l'hydrophobine est inférieur à 1/5, de préférence inférieur à 1/10.

2. Composition selon la revendication 1, dans laquelle l'ester d'acide gras de sucrose a une valeur HLB située dans la plage de 1 à 6, de préférence de 1 à 5, de préférence de 2 à 4.

3. Composition selon la revendication 1 ou 2, dans laquelle la concentration de l'ester d'acide gras de sucrose est située dans la plage de 2 % à 15 % en poids, de préférence de 4 % à 12 % en poids de la composition.

4. Composition selon l'une quelconque des revendications 1 à 3, dans laquelle l'ester d'acide gras de sucrose comprend un ou plusieurs composés choisis dans le groupe constitué du tristéarate de sucrose, du tétrastéarate de sucrose, du pentastéarate de sucrose, du tripalmitate de sucrose, du tétrapalmitate de sucrose et du pentapalmitate de sucrose.

5. Composition selon l'une quelconque des revendications 1 à 4, dans laquelle l'ester d'acide gras de sucrose a une composition d'ester dans laquelle la quantité de mono-ester est au maximum de 40 % de la quantité totale d'ester, de préférence au maximum de 30 %, de préférence au maximum de 20 %, de préférence au maximum de 15 %.

**6.** Composition selon l'une quelconque des revendications 1 à 5, dans laquelle le taux de foisonnement est situé dans la plage de 15 % à 500 %, de préférence de 20 % à 400 %, de préférence de 30 % à 250 %, de préférence de 40 % à 250 %, de préférence de 50 % à 250 %.

**7.** Composition selon l'une quelconque des revendications 1 à 6, dans laquelle au moins 50 % du volume du gaz de la composition est constitué de bulles de gaz ayant un diamètre équivalent basé sur le volume au maximum de 60 micromètres, de préférence au maximum de 50 micromètres.

**8.** Composition selon l'une quelconque des revendications 1 à 7, dans laquelle les bulles de gaz ont une taille des bulles moyenne en volume d4,3 au maximum de 70 micromètres, de préférence au maximum de 60 micromètres, de préférence au maximum de 50 micromètres.

**9.** Composition selon l'une quelconque des revendications 1 à 8, dans laquelle la concentration de l'hydrophobine est située dans la plage de 0,01 % en poids à 0,5 % en poids par rapport au poids de la composition.

**10.** Composition selon l'une quelconque des revendications 1 à 9, dans laquelle l'hydrophobine comprend de l'hydrophobine de classe II.

**11.** Composition selon l'une quelconque des revendications 1 à 10, laquelle composition est une composition anhydre.

**12.** Composition selon l'une quelconque des revendications 1 à 11, dans laquelle l'huile comestible comprend une huile lipidique et une graisse structurante, et dans laquelle la quantité de graisse structurante est au maximum de 25 % en poids de l'huile comestible, de préférence au maximum de 15 % en poids de l'huile comestible.

**13.** Procédé de préparation d'une composition selon l'une quelconque des revendications 1 à 12, comprenant les étapes suivantes :

a) apport d'un mélange liquide d'une huile comestible et d'un ester d'acide gras de sucrose ayant une valeur HLB située dans la plage de 1 à 7 à une concentration située dans la plage de 1 % à 20 % en poids de la composition ;
b) mélange d'hydrophobine dans le mélange liquide de l'étape a) à une concentration située dans la plage de 0,01 à 1 % en poids de la composition ; et
c) aération du mélange liquide de l'étape b) à un taux de foisonnement situé dans la plage de 15 % à 500 %.

**14.** Procédé selon la revendication 13, dans lequel l'hydrophobine de l'étape b) est sous forme séchée.

**15.** Utilisation d'une composition selon l'une quelconque des revendications 1 à 12 ou préparée suivant le procédé de la revendication 13 ou 14 pour réduire les éclaboussures durant la friture plate d'un produit alimentaire.

**Figure 1/3**

**Figure 2/3**

**Figure 3/3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006010425 A1
- WO 2007087968 A1
- WO 2010136355 A1
- EP 2052628 A1
- WO 2010067059 A1
- WO 2010145966 A1
- JP 7016051 A
- EP 1052284 A1
- EP 410507 A2
- US 20060078659 A1
- EP 375238 A2
- EP 1813622 A1
- WO 0174864 A
- WO 9641882 A
- WO 0157076 A

### Non-patent literature cited in the description

- **WESSELS.** *Advances in Microbial Physiology,* 1997, vol. 38, 1-45
- **WOSTEN.** *Annual Reviews of Microbiology,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol.,* 1999, vol. 65, 5431-5435
- **WOSTEN.** *Annu Rev. Microbiol.,* 2001, vol. 55, 625-646
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85